# EUROPÄISCHE PATENTSCHRIFT

(11) **EP 1 277 185 B1**
(45) Veröffentlichungstag und Bekanntmachung des Hinweises auf die Patenterteilung: **06.09.2006**
(21) Anmeldenummer: 01927683.1
(22) Anmeldetag: 21.02.2001
(51) Int. Cl.: G07F 19/00

(54) **VERFAHREN ZUR VERRINGERUNG DER RISIKEN VON E-COMMERCE-GESCHÄFTEN**
METHOD FOR REDUCING THE RISKS OF E-COMMERCE TRANSACTIONS
PROCEDE POUR REDUIRE LES RISQUES DANS DES TRANSACTIONS DE COMMERCE ELECTRONIQUE

(30) Priorität: 23.02.2000 DE 10008459
(43) Veröffentlichungstag der Anmeldung: 22.01.2003
(73) Patentinhaber: WebTRADE.NET - The-Payment-Company GmbH, 60323 Frankfurt (DE)
(72) Erfinder: KIESSLER, Helge, 60322 Frankfurt (DE); NEUMANN, Norbert, 51399 Burscheid (DE)
(74) Vertreter: Wolff, Felix
(86) Internationale Anmeldenummer: PCT/EP2001/001944
(87) Internationale Veröffentlichungsnummer: WO 2001/063575

(56) Entgegenhaltungen:
- EP-A- 0 813 325
- EP-A- 0 927 945
- WO-A-98/47116
- US-A- 5 903 878

## Beschreibung

Die vorliegende Erfindung betrifft Telekommunikationsverfahren zur automatisierten Vergabe einer persönlichen Identifizierung sowie Telekommunikationsverfahren zur automatisierten Bezahlung mittels dieser persönlichen Identifizierung.

Aus der Druckschrift WO 98/47116 ist bereits ein Zahlungsverfahren und eine Vorrichtung bekannt, bei der ein Diensteknoten die Zahlung bzw. den Geldtransfer von einem Kundenkonto eines Kundenkreditinstituts auf ein Händlerkonto eines Händterkseditinstituts erleichtert.

Das Volumen an Geschäften, insbesondere an Kaufgeschäften, sogenannten e-Commerce-Geschäften, die über World-Wide-Web-Dienste zwischen dem Käufer und dem Verkäufer abgeschlossen werden, nimmt dramatisch zu.

Bei diesen Geschäften sucht sich der Käufer auf der Homepage des Verkäufers Waren aus und bezahlt diese in der Regel indem er seine Kreditkartennummer angibt und der Betrag Ober das getätigte Kaufgeschäft von seinem Kreditkartenkonto abgebucht wird.

Viele Käufer haben jedoch Bedenken, ihre Kreditkartennummer auf elektronischem Wege Ober das World-Wide-Web an den Verkäufer zu übermitteln. Sie gehen nur üngem das Risiko ein, daß unbefugte Dritte ebenfalls Kenntnis von ihrer Kreditkartennummer erlangen und damit Mißbrauch treiben könnten. Es ist daher häufig zu beobachten, daß viele potentielle Käufer auf der Homepage des Verkäufers zwar die gewünschten Waren auswählen, aber dann nicht bereit sind, ihre Kreditkartennummer anzugeben. Statt dessen verzichten die potentiellen Käufer häufig auf das Kaufgeschäft und verlassen die Homepage des Verkäufers.

Dieses Risiko eines Mißbrauchs seiner vertraulichen Daten nimmt für den Käufer mit der Anzahl seiner über das World-Wide-Web getätigten Kaufgeschäfte stetig zu. Zudem gibt es viele Verkäufer im World-Wide-Web, die eine sichere Verschlüsselung der vertraulichen Daten des Käufers nicht immer gewährleisteten können.

Aufgabe der vorliegenden Erfindung war es daher, ein Verfahren zur Verfügung zu stellen, mit dem die Risiken bei e-Commerce-Geschäften schnell und einfach verringert werden können.

Diese Aufgabe wird erfindungsgemäß durch ein Verfahren zur automatisierten Vergabe einer persönlichen Identifizierung zur Verringerung der Risiken bei e-Commerce-Geschäften mittels Datenkommunikationsvorrichtungen, Telekommunikationsnetzen und Datenkonzentrationsvorrichtungen gelöst, wobei das Verfahren zwei automatisierte Teilverfahren aufweist und das erste Teilverfahren I aus einer beliebigen Wiederholung der folgenden Verfahrensschritte besteht:
a) Übermittlung des Wunsches nach einer persönlichen Identifizierung, der Teilnehmernummer eines mobilen Endgerätes des Käufers, der Adresse des Käufers und ggf. des Namens des Käufers mittels einer Datenkommunikationsvorrichtung über ein Telekommunikationsnetz an eine Datenkonzentrationsvorrichtung,
b) Zahlung eines Mindestbetrags und
c) Prüfung der in Schritt a) übermittelten Teilnehmernummer, der Adresse des Käufers, ggf. des Namens des Käufers und/oder des in Schritt b) gezahlten Mindestbetrags in der Datenkonzentrationsvorrichtung anhand der dort verfügbaren Daten und wenigstens eines Prüfkriteriums,
   wobei im Falle der erfolgreichen Prüfung:
   cc1) die Zuordnung einer persönlichen Identifizierung zu der jeweiligen Teilnehmernummer, der Adresse des Käufers und ggf. dem Namens des Käufers in der Datenkonzentrationsvorrichtung erfolgt,
   cc2) die Teilnehmernummer, der gezahlte Mindestbetrag, die Adresse des Käufers und ggf. der Name des Käufers entsprechend einem Datenaufnahmeverfahren in die in der Datenkonzentrationsvorrichtung verfügbaren Daten übernommen werden, und
   cc3) die persönliche Identifizierung von der Datenkonzentrationsvorrichtung über ein Telekommunikationsnetz an eine Datenkommunikationsvorrichtung rückübermittelt wird,
      und
   wobei das zweite Teilverfahren l' aus einer beliebigen Wiederholung der folgenden Verfahrensschritte besteht:
   a') Übermittlung der im Verfahrensschritt cc3) erhaltenen persönlichen Identifizierung mittels einer Datenkommunikationsvorrichtung über ein Telekommunikationsnetz an die Datenkonzentrationsvorrichtung und
   b') Überprüfung der in Schritt a') übermittelten persönlichen Identifizierung in der Datenkonzentrationsvorrichtung anhand der dort vorhandenen Daten,
wobei im Falle der erfolgreichen Prüfung die persönliche Identifizierung von der Datenkonzentrationsvorrichtung freigeschaltet wird,
und wobei die in den Verfahrensschritten cc3) und/oder a') zum Einsatz kommende(n) Datenkommunikationsvorrichtung(en) von der im Verfahrenschritt a) zum Einsatz kommenden Datenkommunikationsvorrichtung verschieden ist/sind.

Eine Datenkommunikationsvorrichtung im Sinne der Erfindung ist jede Vorrichtung mit der Daten und/oder Sprache gesendet und empfangen werden können. Vorzugsweise ist die Datenkommunikationsvorrichtung ein Datenterminal, das u.a. HTML (HyperTextMarkupLanguage)-fähig ist, ein persönlicher digitaler Assistent, ein Telefon, ein mobiles Endgerät, ein Telefax oder eine Vorrichtung zur Übermittlung von Sprachnachrichten.
Besonders bevorzugt ist die Datenkommunikationsvorrichtung ein gängiger Personal Computer oder ein Laptop- bzw. Palmtop-Computer, ein Mobiltelefon oder ein Pager.

Von einer solchen Datenkommunikationsvorrichtung werden der Wunsch nach einer persönlichen Identifizierung, die Teilnehmernummer eines mobilen Endgerätes des Käufers, die Adresse des Käufers und ggf. auch dessen Name an die Datenkonzentrationsvorrichtung übermittelt.

Ein mobiles Endgerät im Sinne der Erfindung ist jedes tragbare Gerät, daß sich zum Senden und Empfangen von Daten und/oder Sprache eignet, das über eine zugehörige Teilnehmernummer addressiert werden kann. Vorzugsweise ist das mobile Endgerät ein Mobiltelefon oder ein Pager.

Ein Telekommunikationsnetz im Sinne der Erfindung ist jedes Netz über das Sprache und Daten übertragen werden können.

Eine Datenkonzentrationsvorrichtung im Sinne der Erfindung ist jeder einzelne Datenbankcomputer oder aber ein Computernetzwerk mit einer Netzwerkdatenbank. Im Falle der Verwendung eines Computernetzwerkes mit einer Netzwerkdatenbank als Datenkonzentrationsvorrichtung ergibt sich hier die vorteilhafte Möglichkeit unterschiedliche Teile des Netzwerkes und damit auch unterschiedliche Datenbanken in die jeweilige Prüfung einzubeziehen. Dabei können dieses Bereiche durchaus auch flexibel überlappen.

Die Zahlung des Mindestbetrags kann auf jede an sich bekannte Art und Weise erfolgen.
Vorzugsweise erfolgt die Zahlung des Mindestbetrages elektronisch, besonders bevorzugt mittels Kreditkarte, elektronischem Lastschriftverfahren oder Geldkarte. Falls die Zahlung des Mindestbetrags elektronisch erfolgt, werden die dazu erforderlichen Daten, wie z.B. Kreditkartennummer und Ablaufdatum der Kreditkarte oder Bankleitzahl und Kontonummer bei elektronischem Lastschriftverfahren ebenfalls von einer Datenkommunikationsvorrichtung über ein Telekommunikationsnetz an die Datenkonzentrationsvorrichtung übermittelt. Ebenfalls bevorzugt ist der Einzug des Mindestbetrags über die Gebührenabrechnung des mobilen Endgerätes.

Es ist jedoch auch möglich, daß ein Käufer den Mindestbetrag per Scheck oder per Überweisung vorzugsweise an das Unternehmen entrichtet, welches die Vergabe der persönlichen Identifizierung anbietet.

Die Höhe des Mindestbetrags beträgt vorzugsweise ≥ 20 DM, besonders bevorzugt ≥ 30 DM und ganz besonders bevorzugt ≥ 50 DM oder jeweils dem entsprechenden Gegenwert in einer anderen Währung, wie beispielsweise Euro, US-Dollar oder Yen.

Vorzugsweise werden die Daten des Käufers, wie z.B. die Teilnehmernummer seines mobilen Endgerätes, seine Adresse, ggf. sein Name in verschlüsselter Form von der Datenkommunikationsvorrichtung an die Datenkonzentrationsvorrichtung übertragen. Sofern auch die Zahlung des Mindestbetrags elektronisch erfolgt, werden auch die hierzu erforderlichen Daten des Käufers in verschlüsselter Form übertragen.
Die Verschlüsselungen dieser o.g. Daten erfolgt mit Hilfe von dem Fachmann bekannten Computerprogrammen, wie z.B. Pretty Good Privacy (PGP) von Mc Affee, Secure Socket Layer (SSL) von Netscape/RSA oder Secure Electronic Transaction (SET) von visa/mastercard/setcor.

In der Datenkonzentrationsvorrichtung werden die von der Datenkommunikationsvorrichtung übermittelte Teilnehmernummer des mobilen Endgerätes des Käufers, die Adresse des Käufers und ggf. der Name des Käufers anhand der dort vorhandenen Daten überprüft.
So wird vorzugsweise überprüft, ob die Adresse des Käufers, die üblicherweise aus Straße, ggf. Hausnummer, Postleitzahl und Ort besteht, existiert oder gemäß den in der Datenkonzentrationsvorrichtung vorhandenen Daten als plausibel eingestuft werden kann.

Vorzugsweise wird auch die Teilnehmernummer des mobilen Endgerätes überprüft. So kann z.B. die Vergabe einer persönlichen Identifizierung verweigert werden, wenn die Teilnehmernummer einer sogenannten pre-paid Telefonkarte zugeordnet ist.

Desweiteren wird anhand des Namens des Käufers vorzugsweise überprüft, ob in der Vergangenheit Insolvenz- oder Betrugsverfahren gegen diesen anhängig waren. Ebenfalls bevorzugt wird überprüft, ob der von dem Käufer bezahlte Betrag dem Mindestbetrag entspricht.
Die Vergabe einer persönlichen Identifizierung kann verweigert werden, wenn der gezahlte Betrag unterhalb des zu zahlenden Mindestbetrags liegt.

Erfolgt die Zahlung des Mindestbetrages per Kreditkarte, wird vorzugsweise die Kreditkartennummer in Kombination mit dem Ablaufdatum der Kreditkarte in der Datenkonzentrationsvorrichtung überprüft. Bei Zahlung des Mindestbetrags per elektronischem Lastschriftverfahren wird in der Datenkonzentrationsvorrichtung vorzugsweise überprüft, ob die Kombination aus angegebener Bankleitzahl und Kontonummer nach den Regularien der Deutschen Bundesbank eine gültige Kombination darstellt.

Verläuft die Prüfung erfolgreich, vergibt die Datenkonzentrationsvorrichtung automatisch eine persönliche Identifizierung und ordnet sie der Teilnehmernummer, der Adresse und/oder ggf. dem Namen des Käufers zu.

Eine persönliche Identifizierung im Sinne der Erfindung ist jede Information, die eine eindeutige Zuordnung des Käufers erlaubt. Vorzugsweise ist die persönliche Identifizierung eine persönliche Identifikationsnummer (PIN) oder ein Kennwort, besonders bevorzugt eine Kombination aus Buchstaben und Zahlen. Eine solche persönliche Identifizierung kann von der Datenkonzentrationsvorrichtung z.B. nach einem Zufallsalgorithmus, vorzugsweise unter Berücksichtigung individueller Daten, wie beispielsweise der sekundengenauen Uhrzeit, der Teilnehmernummer des mobilen Endgerätes, der Netzwerk-Identifikation eines Computers oder der Prozessorseriennummer eines Computers erzeugt werden.
Es ist aber auch möglich, daß in der Datenkonzentrationsvorrichtung eine große Anzahl von persönlichen Identifizierungen gespeichert sind, von denen durch die Datenkonzentrationsvorrichtung dann eine dem jeweiligen Käufer zugeordnet wird.

Zur Bestätigung der persönlichen Identifizierung muß der Käufer diese nach dem Erhalt wieder von einer Datenkommunikationsvorrichtung über ein Telekommunikationsnetz an die Datenkonzentrationsvorrichtung übermitteln, damit diese persönliche Identifizierung freigeschaltet wird.
Vorzugsweise erfolgt diese Übermittlung mittels einer Datenkommunikationsvorrichtung, die von der Datenkommunikationsvorrichtung verschieden ist, mit der der Käufer den Wunsch nach einer persönlichen Identifizierung übermittelt hat.

Vorzugsweise ist die Vergabe einer persönlichen Identifizierung für den Käufer kostenlos.

Ein weiterer Gegenstand der Erfindung sind auch Verfahren zur automatisierten Bezahlung mittels Datenkommunikationsvorrichtungen, Telekommunikationsnetzen, Datenkonzentrationsvorrichtung und einer gemäß einem erfindungsgemäßen Verfahren vergebenen persönlichen Identifizierung, bestehend aus zwei automatisierten Teilverfahren, wobei das erste Teilverfahren I zur automatisierten Vergabe einer Transaktionsnummer (TAN) eine beliebige Anzahl von Wiederholungen der folgenden Verfahrensschritte aufweist:
a) Übermittlung des Wunsches nach einer TAN, ggf. des zu zahlenden Betrags, für den die TAN gewünscht wird und der persönlichen Identifizierung mittels einer Datenkommunikationsvorrichtung über ein Telekommunikationsnetz an eine Datenkonzentrationsvorrichtung,
b) Prüfung der in Schritt a) übermittelten persönlichen Identifizierung und ggf. des zu zahlenden Betrags in der Datenkonzentrationsvorrichtung anhand der dort verfügbaren Daten,
wobei im Falle der erfolgreichen Prüfung:
bb1) die Zuordnung einer TAN zu der persönlichen Identifizierung in der Datenkonzentrationsvorrichtung erfolgt,
bb2) die TAN und ggf. der zu zahlende Betrag entsprechend einem Datenaufnahmeverfahren in die in der Datenkonzentrationsvorrichtung verfügbaren Daten übernommen werden, und
bb3) die TAN von der Datenkonzentrationsvorrichtung über ein Telekommunikationsnetz an eine Datenkommunikationsvorrichtung rückübermittelt wird,
und wobei das zweite Teilverfahren l'eine beliebige Wiederholung der folgenden Verfahrensschritte umfaßt
a') Übermittlung der in Verfahrensschritt bb3) erhaltenen TAN von einer Datenkommunikationsvorrichtung über ein Telekommunikationsnetz an die Datenkonzentrationsvorrichtung,
b') Prüfung der in Schritt a') übermittelten TAN durch die Datenkonzentrationsvorrichtung,
wobei die in den Verfahrensschritten bb3) und/oder a') zum Einsatz kommende(n) Datenkommunikationsvorrichtung(en) von der in Schritt a) zum Einsatz kommenden Datenkommunikationsvorrichtung verschieden ist/sind, und wobei
im Falle der erfolgreichen Prüfung die Zahlung des entsprechenden Betrags durch die Datenkonzentrationsvorrichtung erfolgt.

Eine Transaktionsnummer im Sinne der Erfindung ist eine Zahl oder ein Kennwort, vorzugsweise eine Kombination aus Zahlen und Buchstaben, die jeweils nur für ein zu tätigendes Kaufgeschäft gültig ist.

Diese TAN kann z.B. von der Datenkonzentrationsvorrichtung nach einem Zufallsalgorithmus, vorzugsweise unter Berücksichtigung individueller Daten, wie z.B. der sekundengenauen Uhrzeit, der Teilnehmernummer des mobilen Endgerätes, der Netzwerk-Identifikation eines Computers oder der Prozessorseriennummer eines Computers erzeugt werden.
Es ist aber auch möglich, daß in der Datenkonzentrationsvorrichtung eine große Anzahl von Transaktionsnummern gespeichert ist, von denen dann eine TAN der persönlichen Identifizierung und ggf. dem zu zahlenden Betrag zugeordnet wird.

Vorzugsweise hat die TAN nur eine zeitlich befristete Gültigkeit, die vorzugsweise ≤ 30 Minuten, besonders bevorzugt ≤ 15 Minuten und ganz besonders bevorzugt ≤ 10 Minuten beträgt.

Ein weiterer Gegenstand der Erfindung ist ein Verfahren zur automatisierten Bezahlung mittels Datenkommunikationsvorrichtungen; Telekommunikationsnetzen, Datenkonzentrationsvorrichtung und einer gemäß einem der erfindungsgemäßen Verfahren vergebenen persönlichen Identifizierung, welches eine beliebige Anzahl von Wiederholungen der folgenden Verfahrensschritte aufweist
a) Übermittlung der persönlichen Identifizierung und des zu zahlenden Betrags mittels einer Datenkommunikationsvorrichtung über ein Telekommunikationsnetz an eine Datenkonzentrationsvorrichtung, und
b) Prüfung der in Schritt a) übermittelten persönlichen Identifizierung und des zu zahlenden Betrags in der Datenkonzentrationsvorrichtung anhand der dort verfügbaren Daten, wobei im Falle der erfolgreichen Prüfung die Zahlung durch die Datenkonzentrationsvorrichtung erfolgt

Vorzugsweise ist die Teilnahme an den Verfahren zur automatisierten Bezahlung für den Käufer kostenlos.

Die Erfindung wird nachfolgend anhand von in der Zeichnung dargestellten Ausführungsbeispielen näher erläutert. Es zeigen
Figur 1 eine erste Prinzipskizze zur Darstellung eines erfindungsgemäßen Verfahrens zur automatisierten Bezahlung.
Figur 2 eine zweite Prinzipskizze zur Darstellung des erfindungsgemäßen Verfahrens zur automatisierten Bezahlung.

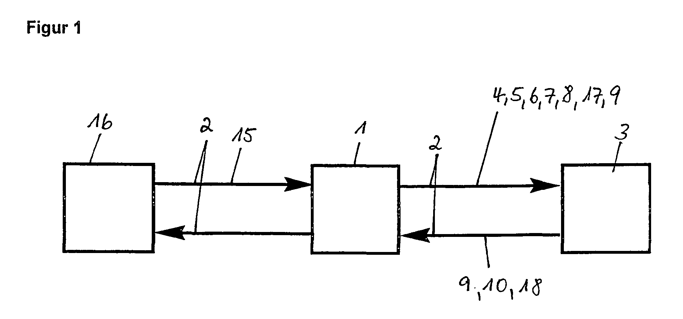

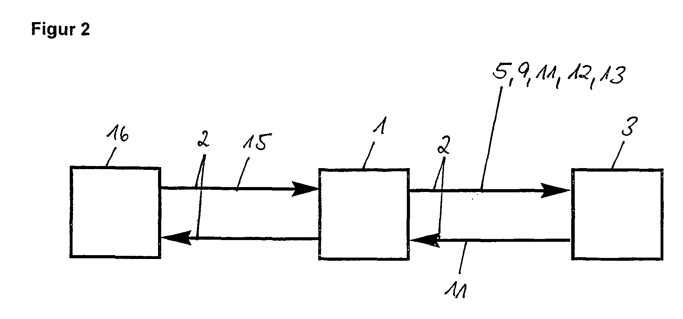

Im folgenden werden die erfindungsgemäßen Verfahren anhand der Figuren 1 und 2 erläutert. Diese Erläuterungen sind lediglich beispielhaft und schränken den allgemeinen Erfindungsgedanken nicht ein.

Bei diesem Beispiel besucht der Käufer die Homepage eines Verkäufers im World Wide Web und möchte dort einige Waren mit einem geringen Warenwert kaufen.

Der Kunde bedient sich eines Personal Computers (PC) 1, um die Homepage des Verkäufers 15 nebst aller Daten von dessen Server 16 über das Telekommunikationsnetz 2 auf seinen PC 1 zu laden.

Bevor der Käufer auf dieser Homepage mit der Auswahl von Waren beginnt, wird er gefragt, ob er eine persönliche Identifizierung wünscht, die es ihm gestattet, Kaufgeschäfte im World Wide Web mit einer hohen Sicherheit zu tätigen.

Falls er diese Frage mit "ja" beantwortet, öffnet sich auf der Homepage ein Formular, in das er seine Mobiltelefonnummer 5, seinen Namen 7, seine Adresse 6 bestehend aus der Straße, ggf. der Hausnummer, der Postleitzahl und dem Ort, sowie seine Kontonummer und die zugehörige Bankleitzahl 17 eingibt. Der Käufer wählt außerdem einen Betrag 8 aus, der dem zu zahlenden Mindestbetrag entspricht. Sobald der Käufer diese Daten, z.B. durch Drücken des Buttons "Get your personal identification now" bestätigt, wird das erfindungsgemäße Verfahren zur automatisierten Vergabe einer persönlichen Identifizierung in Gang gesetzt.

Mittels parametrisiertem Hyperlink werden der Wunsch des Käufers nach seiner persönlichen Identifizierung 4, seine Mobiltelefonnummer 5, seine Adresse 6, sein Name 7, der gewählte Betrag 8, seine Kontonummer und seine Bankleitzahl 17 in verschlüsselter Form von seinem PC 1 über das Telekommunikationsnetz 2 an den Computer 3 übertragen.
Der Computer 3 ist über ein Netzwerk mit mehreren Datenbanken, wie z.B. der Datenbank der Deutschen Bundesbank verbunden. Üblicherweise wird dieser Computer 3 von dem Unternehmen betrieben, das die Vergabe der persönlichen Identifizierung 9 anbietet oder von einem ihm angeschlossenen Unternehmen.

In diesem Computer 3 werden die übermittelten Daten zunächst entschlüsselt und dann mit Hilfe der daran angeschlossenen Datenbanken überprüft. Es wird überprüft, ob die Mobiltelefonnummer 5 über eine pre-paid Karte oder über einen Kartenvertrag freigeschaltet wurde. Desweiteren wird die Adresse 6 des Teilnehmers verifiziert, indem überprüft wird, ob die von dem Käufer angegebene Kombination aus Straße, ggf. Hausnummer, Postleitzahl und Ort existiert oder gemäß den in der angeschlossenen Datenbank gepeicherten Daten plausibel ist.
Zusätzlich wird überprüft, ob die Kombination aus Kontonummer und Bankleitzahl 17 nach den Regularien der Deutschen Bundesbank für die Vergabe von Kontonummern und Bankleitzahlen eine gültige Kombination darstellt.

Abschließend wird noch überprüft, ob der vom Käufer gezahlte Betrag 8 dem festgesetzten Mindestbetrag entspricht oder ob er diesen unterschreitet.

Verläuft diese Prüfung positiv, generiert eine der an den Computer angeschlossenen Datenbanken eine persönliche Identifizierung 9 und ordnet diese dem Namen 7, der Mobiltelefonnummer 5 und der Adresse 6 des Käufers zu.

Danach übernimmt er die Mobiltelefonnummer 5, den Namen 7 und die Adresse 6 des Käufers sowie den gezahlten Betrag 8 mit einem Datenübernahmeverfahren in eine angeschlossene Datenbank und rücküberträgt über ein Telekommunikationsnetz 2 die persönliche Identifizierung 9 an den PC 1 per elektronischer mail 18.

Der Käufer übermittelt nun diese persönliche Identifizierung 9 mit Hilfe des Short Message Service von seinem Mobiltelefon 1 über das Telekommunikationsnetz 2 an den Computer 3.

Der Computer 3 überprüft, ob die übermittelte persönliche Identifizierung 9 und die Mobiltelefonnummer 5 mit den Daten in der ihm angeschlossenen Datenbank übereinstimmen. Bei erfolgreicher Prüfung wird die persönliche Identifizierung 9 des Käufers freigeschaltet 10, d.h. der Käufer kann jetzt diese persönliche Identifizierung verwenden, um an einem automatisierten Zahlungsverfahren im World-Wide-Web teilzunehmen.

Auf der Homepage des Verkäufers 15 sucht der Käufer sich dann die gewünschten Waren aus und legt diese in einen virtuellen Warenkorb, der sich auf der Homepage des Verkäufers befindet. Sobald der Käufer dann den Button, z.B. "Safe payment with your personal identification and TAN" drückt, öffnet sich ein Formular, in das er seine persönliche Identifizierung 9 und seine Mobiltelefonnummer 5 eingibt. Durch Drücken eines Buttons, z.B. "Press this to pay" wird das erfindungsgemäße Verfahren zur automatischen Bezahlung in Gang gesetzt.

Dieses Verfahren zur automatisierten Bezahlung ist in Figur 2 dargestellt.

Per parametrisiertem Hyperlink werden der Wunsch nach einer TAN 12, die Mobiltelefonnummer 5, die persönliche Identifizierung 9 und der Betrag 13, für den die TAN gewünscht wird von dem PC 1 über das Telekommunikationsnetz 2 an den Computer 3 übermittelt.

Anhand der in dem Computer 3 oder den daran angeschlossenen Datenbanken vorhandenen Daten wird die persönliche Identifikationsnummer 9 überprüft.
Verläuft die Prüfung erfolgreich, so generiert der Computer 3 oder eine daran angeschlossene Datenbank eine TAN 11 und ordnet diese der persönlichen Identifizierung 9 und der Mobiltelefonnummer 5 zu. Danach übernimmt er die TAN 11 mit einem Datenübernahmeverfahren in eine angeschlossene Datenbank und rücküberträgt über das Telekommunikationsnetz 2 die TAN 11 mit Hilfe des Short Message Service an das Mobiltelefon 1 des Käufers.

Der Käufer gibt nun diese TAN 11 zusammen mit der persönlichen Identifizierung 9 in das Formular auf der Homepage 15 des Verkäufers ein und bestätigt die Zahlung durch Drücken eines Buttons, wie z.B. "Pay now".

Per parametrisiertem Hyperlink werden die TAN 11 und die persönliche Identifizierung 9 über das Telekommunikationsnetz 2 an den Computer 3 und die daran angeschlossenen Datenbanken übertragen und anhand der dort vorhandenen Daten überprüft. Stimmt diese Kombination aus TAN 11 und persönlicher Identifizierung 9 mit der in der Datenbank gespeicherten Kombination überein, veranlaßt der Computer 3 die Zahlung an den Verkäufer.

## Patentansprüche

1. Verfahren zur automatisierten Vergabe einer persönlichen Identifizierung mittels Datenkommunikationsvorrichtungen (1), Telekommunikationsnetzen (2) und Datenkonzentrationsvorrichtung (3), wobei das Verfahren zwei automatisierte Teilverfahren aufweist, wobei das erste Teilverfahren I aus einer beliebigen Wiederholung der folgenden Verfahrensschritte besteht
a) Übermittlung des Wunsches nach einer persönlichen Identifizierung (4), der Teilnehmernummer eines mobilen Endgerätes des Käufers (5), der Adresse des Käufers (6) und ggf. des Namens des Käufers (7) mittels einer Datenkommunikationsvorrichtung (1) über ein Telekommunikationsnetz (2) an eine Datenkonzentrationsvorrichtung (3),
b) Zahlung eines Mindestbetrags, (8) und
c) Prüfung der in Schritt a) übermittelten Teilnehmernummer (5), der Adresse des Käufers (6) und ggf. des Namens (7) des Käufers und/oder des in Schritt b) gezahlten Mindestbetrags (8) in der Datenkonzentrationsvorrichtung (3) anhand der dort verfügbaren Daten und wenigstens eines Prüfkriteriums,
wobei im Falle der erfolgreichen Prüfung:
cc1) die Zuordnung einer persönlichen Identifizierung (9) zu der jeweiligen Teilnehmernummer (5), der Adresse des Käufers (6) und ggf. dem Namen des Käufers (7) in der Datenkonzentrationsvorrichtung (3) erfolgt,
cc2) die Teilnehmernummer (5), der gezahlte Mindestbetrag (8), die Adresse des Käufers (6) und ggf. der Name des Käufers (7) entsprechend einem Datenaufnahmeverfahren in die in der Datenkonzentrationsvorrichtung (3) verfügbaren Daten übernommen werden, und
cc3) die persönliche Identifizierung (9) von der Datenkonzentrationsvorrichtung (3) über ein Telekommunikationsnetz (2) an eine Datenkommunikationsvorrichtung (1) rockübermittelt wird, und
wobei das zweite Teilverfahren l' aus einer beliebigen Wiederholung der folgenden Verfahrensschritte besteht:
a') Übermittlung der im Verfahrensschritt cc3) erhaltenen persönlichen Identifizierung (9) mittels einer der Datenkommunikationsvorrichtungen (1) über ein Telekommunikationsnetz (2) an die Datenkonzentrationsvorrichtung (3), und
b') Überprüfung der in Schritt a') übermittelten persönlichen Identifizierung in der Datenkonzentrationsvorrichtung anhand der dort vorhandenen Daten,
wobei im Falle der erfolgreichen Prüfung die persönliche Identifizierung (9) von der Datenkonzentrationsvorrichtung (3) freigeschaltet wird (10), und wobei die im Verfahrensschritt cc3) zum Einsatz kommende der Datenkommunikationsvorrichtungen (1) von der in dem Verfahrensschritt a) zum Einsatz kommenden der Datenkommunikationsvorrichtungen (1) verschieden ist oder wobei die im Verfahrensschritt a') zum Einsatz kommende der Datenkommunikationsvorrichtungen (1) von der in dem Verfahrensschritt a) zum Einsatz kommenden der Datenkommunikationsvorrichtungen (1) verschieden ist.

2. Verfahren gemäss Anspruch 1, **dadurch gekennzeichnet, dass** in die in den Verfahrensschritten a) und cc3) zum Einsatz kommende der Datenkommunikationsvorrichtungen (1) ein Personal Computer ist und die in dem Verfahrenschritt a') zum Einsatz kommende der Datenkommunikationsvorrichtungen (1) ein Mobiltelefon ist.

3. Verfahren gemäss Anspruch 2, **dadurch gekennzeichnet, dass** die Übermittlung der persönlichen Identifizierung (9) in dem Verfahrensschritt a') mittels Short Message Service (SMS) erfolgt.

4. Verfahren gemäss einem der Ansprüche 1 bis 3, **dadurch gekennzeichnet, dass** die persönliche Identifizierung eine persönliche Identifikationsnummer (PIN) oder ein Kennwort, vorzugsweise ein Kennwort aus Buchstaben und Zahlen ist.

5. Verfahren gemäss einem der Ansprüche 1 bis 4, **dadurch gekennzeichnet, dass** die Zahlung des Mindestbetrags per Kreditkarte, per elektronischem Lastschriftverfahren oder durch Einzug Ober die Gebührenabrechnung des mobilen Endgerätes erfolgt.

6. Verfahren gemäss einem der Ansprüche 1 bis 5, **dadurch gekennzeichnet, dass** als Prüfkriterium überprüft wird, ob gegen den Käufer in der Vergangenheit Betrugs- oder Insolvenzverfahren anhängig waren.

7. Verfahren gemäss einem der Ansprüche 1 bis 6, **dadurch gekennzeichnet, dass** als Prüfkriterium untersucht wird, ob die von dem Käufer angegebene Adresse existiert oder eine existierende Adresse darstellen könnte.

8. Verfahren gemäss Anspruch 5, **dadurch gekennzeichnet, dass** als Prüfkriterium die Kombination aus Kreditkartennummer und Ablaufdatum der Kreditkarte oder die Kombination aus Bankleitzahl und Kontonummer überprüft wird.

9. Verfahren zur automatisierten Bezahlung mittels Datenkommunikationsvorrichtungen (1), Telekommunikationsnetzen (2) und Datenkonzentrationsvorrichtung (3) und einer gemäss den Ansprüchen 1 bis 8 vergebenen persönlichen Identifizierung (9), wobei das Verfahren aus zwei automatisierten Teilverfahren besteht, wobei das erste Teilverfahren I zur automatisierten Vergabe einer Transaktionsnummer (TAN) (11) eine beliebige Anzahl von Wiederholungen der nachfolgenden Verfahrensschritte aufweist:
a) Übermittlung des Wunsches nach einer TAN (12), ggf. des zu zahlenden (13) Betrags, für den die TAN gewünscht wird und der persönlichen Identifizierung (9) mittels einer Datenkommunikationsvorrichtung (1) über ein Telekommunikationsnetz (2) an eine Datenkonzentrationsvorrichtung (3)
b) Prüfung der in Schritt a) übermittelten persönlichen Identifizierung (9) und ggf. des zu zahlenden Betrags (13) in der Datenkonzentrationsvonichtung (3) anhand der dort verfügbaren Daten,
wobei im Falle der erfolgreichen Prüfung :
bb1) die Zuordnung einer TAN (11) zu der persönlichen Identifizierung (9) in der Datenkonzentrationsvorrichtung (3) erfolgt,
bb2) die TAN (11) und ggf. der zu zahlende Betrag (13) entsprechend einem Datenaufnahmeverfahren in die in der Datenkonzentrationsvorrichtung (3) verfügbaren Daten aufgenommen werden, und
bb3) die TAN (11) von der Datenkonzentrationsvorrichtung (3) über ein Telekommunikationsnetz (2) an eine Datenkommunikationsvorrichtung (1) rückübermittelt wird, und
wobei das zweite Teilverfahren I' eine beliebige Wiederholung der folgenden Verfahrensschritte umfasst
a') Übermittlung der in Verfahrensschritt bb3) erhaltenen TAN (11) von einer der Datenkommunikationsvorrichtungen (1) über ein Telekommunikationsnetz (2) an eine Datenkonzentrationsvorrichtung (3),
b') Prüfung der in Schritt a') übermittelten TAN (11) durch die Datenkonzentrationsvorrichtung (3),
wobei die im Verfahrensschritt bb3) zum Einsatz kommende der Datenkommunikationsvorrichtungen (1) von der in dem Verfahrensschritt a) zum Einsatz kommenden der Datenkommunikationsvorrichtungen (1) verschieden ist oder
wobei die im Verfahrensschritt a') zum Einsatz kommende der Datenkommunikationsvorrichtungen (1) von der in dem Verfahrensschritt a) zum Einsatz kommenden der Datenkommunikationsvorrichtungen (1) verschieden ist,
wobei im Falle der erfolgreichen Prüfung die Zahlung des entsprechenden Betrags (13) durch die Datenkonzentrationsvorrichtung (3) erfolgt.

10. Verfahren gemäss Anspruch 9, **dadurch gekennzeichnet, dass** die in den Verfahrensschritten a) und/oder a') zum Einsatz kommende der Datenkommunikationsvorrichtungen (1) ein Personal Computer ist und die in dem Verfahrenschritt bb3) und/oder a') zum Einsatz kommende der Datenkommunikationsvorrichtungen (1) ein Mobiltelefon ist.

11. Verfahren gemäss Anspruch 10, **dadurch gekennzeichnet, dass** die Übermittlung der TAN (11) in dem Verfahrensschritt a') und/oder bb3) mittels Short Message Service (SMS) erfolgt.

12. Verfahren zur automatisierten Bezahlung gemäss einem der Ansprüche 9 bis 11, **dadurch gekennzeichnet, dass** die TAN eine begrenzte Gültigkeit von kleiner oder gleich 30 Minuten, bevorzugt kleiner oder gleich 15 Minuten, besonders bevorzugt kleiner oder gleich 10 Minuten hat.

13. Verfahren zur automatisierten Bezahlung mittels Datenkommunikationsvorrichtung (1),Telekommunikationsnetzen (2) und Datenkonzentrationsvorrichtung (3), wobei das Verfahren eine beliebige Anzahl von Wiederholungen der nachfolgenden Verfahrensschritte aufweist:
a) Übermittlung des zu zahlenden Betrags (13) und einer gemäss der Ansprüchen 1 bis 8 vergebenen persönlichen Identifizierung (9) mittels einer Datenkommunikationsvorrichtung (1) über ein Telekommunikationsnetz (2) an eine Datenkonzentrationsvorrichtung (3), und
b) Prüfung der in Schritt a) übermittelten persönlichen Identifizierung (9) und des zu zahlenden Betrages (13) in der Datenkonzentrationsvorrichtung (3) anhand der dort verfügbaren Daten,
wobei im Falle der erfolgreichen Prüfung die Zahlung des Betrags (13) durch die Datenkonzentrationsvorrichtung (3) erfolgt.

## Claims

1. A procedure for automated assignment of a personal identifier by means of data communication devices (1), telecommunications networks (2) and a data concentration device (3), wherein the procedure comprises two automated sub-procedures, wherein the first sub-procedure I consists of any desired repetition of the following procedure steps:
a) transmission of the request for a personal identifier (4), the subscriber number of a mobile terminal belonging to the purchaser (5), the address of the purchaser (6) and optionally the name of the purchaser (7) by means of a data communication device (1) over a telecommunications network (2) to a data concentration device (3),
b) payment of a minimum amount (8) and
c) checking of the subscriber number (5) transmitted in step a), the address of the purchaser (6) and optionally the name (7) of the purchaser and/or of the minimum amount (8) paid in step b) in the data concentration device (3) on the basis of the data available therein and at least one checking criterion,
wherein if said check is successful:
cc1) a personal identifier (9) is assigned to the respective subscriber number (5), the address of the purchaser (6) and optionally the name of the purchaser (7) in the data concentration device (3),
cc2) the subscriber number (5), the minimum amount (8) paid, the address of the purchaser (6) and optionally the name of the purchaser (7) are accepted into the data available in the data concentration device (3) in accordance with a data acquisition procedure, and
cc3) the personal identifier (9) is transmitted back by the data concentration device (3) over a telecommunications network (2) to a data communication device (1), and
wherein the second sub-procedure I' consists of any desired repetition of the following procedure steps:
a') transmission of the personal identifier (9) obtained in procedure step cc3) by means of one of the data communication devices (1) over a telecommunications network (2) to the data concentration device (3), and
b') verification of the personal identifier transmitted in step a') in the data concentration device on the basis of the data present therein,
wherein, if said check is successful, the personal identifier (9) is activated (10) by the data concentration device (3), and wherein the one of the data communication devices (1) which is used in procedure step cc3) is different from the one of the data communication devices (1) which is used in procedure step a) or wherein the one of the data communication devices (1) which is used in procedure step a') is different from the one of the data communication devices (1) which is used in procedure step a) .

2. A procedure according to claim 1, **characterised in that** the one of the data communication devices (1) which is used in procedure steps a) and cc3) is a personal computer and the one of the data communication devices (1) which is used in procedure step a') is a mobile telephone.

3. A procedure according to claim 2, **characterised in that** transmission of the personal identifier (9) in procedure step a') takes place by Short Message Service (SMS).

4. A procedure according to any one of claims 1 to 3, **characterised in that** the personal identifier is a personal identification number (PIN) or a password, preferably a password of letters and numbers.

5. A procedure according to any one of claims 1 to 4, **characterised in that** payment of the minimum amount is made by credit card, by electronic direct debit or by inclusion in the bill for the mobile terminal.

6. A procedure according to any one of claims 1 to 5, **characterised in that** the checking criterion involves verifying whether legal proceedings have been brought against the purchaser in the past for fraud or insolvency.

7. A procedure according to any one of claims 1 to 6, **characterised in that** the checking criterion involves investigating whether the address given by the purchaser exists or could represent an address which exists.

8. A procedure according to claim 5, **characterised in that** the checking criterion involves verifying the combination of credit card number and credit card expiry date or the combination of bank sort code and account number.

9. A procedure for automated payment by means of data communication devices (1), telecommunications networks (2) and a data concentration device (3) and a personal identifier (9) assigned according to claims 1 to 8, wherein the procedure consists of two automated sub-procedures, wherein the first sub-procedure I for automated assignment of a transaction number (TAN) (11) comprises any desired number of repetitions of the following procedure steps:
a) transmission of the request for a TAN (12), optionally of the amount to be paid (13) for which the TAN is requested, and the personal identifier (9) by means of a data communication device (1) over a telecommunications network (2) to a data concentration device (3),
b) checking of the personal identifier (9) transmitted in step a) and optionally of the amount (13) to be paid in the data concentration device (3) on the basis of the data available therein,
wherein if said check is successful:
bb1) a TAN (11) is assigned to the personal identifier (9) in the data concentration device (3),
bb2) the TAN (11) and optionally the amount (13) to be paid are accepted into the data available in the data concentration device (3) by a data acquisition procedure, and
bb3) the TAN (11) is transmitted back by the data concentration device (3) to a data communication device (1) over a telecommunications network (2), and
wherein the second sub-procedure I' includes any desired repetition of the following procedure steps:
a') transmission of the TAN (11) obtained in procedure step bb3) by one of the data communication devices (1) over a telecommunications network (2) to a data concentration device (3),
b') checking of the TAN (11) transmitted in step a') by the data concentration device (3),
wherein the one of the data communication devices (1) which is used in procedure step bb3) is different from the one of the data communication devices (1) which is used in procedure step a) or wherein the one of the data communication devices (1) which is used in procedure step a') is different from the one of the data communication devices (1) which is used in procedure step a), wherein, if said check is successful, payment of the corresponding amount (13) is made by the data concentration device (3).

10. A procedure according to claim 9, **characterised in that** the one of the data communication devices (1) which is used in procedure steps a) and/or a') is a personal computer and the one of the data communication devices (1) which is used in procedure step bb3) and/or a') is a mobile telephone.

11. A procedure according to claim 10, **characterised in that** transmission of the TAN (11) in procedure step a') and/or bb3) takes place by Short Message Service (SMS).

12. A procedure for automated payment according to any one of claims 9 to 11, **characterised in that** the TAN has a limited validity of less than or equal to 30 minutes, preferably less than or equal to 15 minutes, particularly preferably less than or equal to 10 minutes.

13. A procedure for automated payment by means of a data communication device (1), telecommunications networks (2) and a data concentration device (3), wherein the procedure comprises any desired number of repetitions of the following procedure steps:
a) transmission of the amount (13) to be paid and a personal identifier (9) assigned according to claims 1 to 8 by means of a data communication device (1) over a telecommunications network (2) to a data concentration device (3), and
b) checking of the personal identifier (9) transmitted in step a) and of the amount (13) to be paid in the data concentration device (3) on the basis of the data available therein,
wherein, if said check is successful, payment of the amount (13) is made by the data concentration device (3).

## Revendications

1. Procédé pour attribuer automatiquement une identification personnelle au moyen de dispositifs de communication de données (1), de réseaux de télécommunication (2) et de dispositifs de concentration de données (3), le procédé présentant deux procédés partiels automatisés, le premier procédé partiel I se composant d'une répétition quelconque des étapes suivantes :
a) communication du souhait d'obtenir un identifiant personnel (4), du numéro d'abonné d'un terminal mobile de l'acheteur (5), de l'adresse de l'acheteur (6) et éventuellement du nom de l'acheteur (7) au moyen d'un dispositif de communication de données (1) par le biais d'un réseau de télécommunication (2) à un dispositif de concentration de données (3),
b) paiement d'un montant minimum (8) et
c) contrôle du numéro d'abonné (5), de l'adresse de l'acheteur (6) et éventuellement du nom (7) de l'acheteur communiqués à l'étape a) et/ou du montant minimum (8) payé à l'étape b) dans le dispositif de concentration de données (3) au moyen des données qui y sont présentes et d'au moins un critère de contrôle,
en cas de contrôle positif :
cc1) l'affectation d'un identifiant personnel (9) au numéro d'abonné (5), à l'adresse de l'acheteur (6) et éventuellement au nom de l'acheteur (7) correspondant s'effectuant dans le dispositif de concentration de données (3),
cc2) le numéro d'abonné (5), le montant minimum (8) payé, l'adresse de l'acheteur (6) et éventuellement le nom de l'acheteur (7) étant pris en compte dans les données présentes dans le dispositif de concentration de données (3) conformément à une procédure d'enregistrement des données et
cc3) l'identifiant personnel (9) étant retourné par le dispositif de concentration de données (3) à un dispositif de communication de données (1) par le biais d'un réseau de télécommunication (2),
le deuxième procédé partiel I' se composant d'une répétition quelconque des étapes suivantes :
a') communication de l'identifiant personnel (9) obtenu dans l'étape cc3) au dispositif de concentration de données (3) au moyen de l'un des dispositifs de communication de données (1) par le biais d'un réseau de télécommunication (2) et
b') contrôle de l'identifiant personnel communiqué à l'étape a') dans le dispositif de concentration de données à l'aide des données qui s'y trouvent,
en cas de contrôle positif, l'identifiant personnel (9) étant validé (10) par le dispositif de concentration de données (3), et les dispositifs de communication de données (1) employés dans l'étape cc3) étant différents des dispositifs de communication de données (1) employés dans l'étape a) et les dispositifs de communication de données (1) employés dans l'étape a') étant différents des dispositifs de communication de données (1) employés dans l'étape a).

2. Procédé selon la revendication 1, **caractérisé en ce que** les dispositifs de communication de données (1) employés dans les étapes a) et cc3) sont un ordinateur personnel et les dispositifs de communication de données (1) employés dans l'étape a') sont un téléphone mobile.

3. Procédé selon la revendication 2, **caractérisé en ce que** la communication de l'identifiant personnel (9) dans l'étape a') s'effectue au moyen du Service SMS (Short Message Service).

4. Procédé selon l'une des revendications 1 à 3, **caractérisé en ce que** l'identification personnelle est un numéro d'identification personnel (PIN) ou un mot de passe, de préférence un mot de passe composé de lettres et de chiffres.

5. Procédé selon l'une des revendications 1 à 4, **caractérisé en ce que** le paiement du montant minimum s'effectue par carte de crédit, par système de recouvrement direct électronique ou par prélèvement par le biais de la taxation du terminal mobile.

6. Procédé selon l'une des revendications 1 à 5, **caractérisé en ce que** le critère contrôlé est l'existence dans le passé d'une éventuelle procédure pour escroquerie ou insolvabilité à l'encontre de l'acheteur.

7. Procédé selon l'une des revendications 1 à 6, **caractérisé en ce que** le critère contrôlé consiste à vérifier si l'adresse indiquée par l'acheteur existe ou peut représenter une adresse existante.

8. Procédé selon la revendication 5, **caractérisé en ce que** le critère contrôlé est la combinaison du numéro de carte de crédit et de la date d'expiration de la carte de crédit ou la combinaison du numéro de RIB et du numéro de compte.

9. Procédé de paiement automatisé au moyen de dispositifs de communication de données (1), de réseaux de télécommunication (2) et de dispositifs de concentration de données (3) ainsi que d'un identifiant personnel (9) attribué selon l'une des revendications 1 à 8, le procédé se composant de deux procédés partiels automatisés, le premier procédé partiel I se composant d'un nombre quelconque de répétitions des étapes suivantes en vue de l'attribution automatisée d'un numéro de transaction (TAN) (11) :
a) communication du souhait d'obtenir un TAN (12), éventuellement du montant à payer (13) pour lequel un TAN est souhaité et de l'identifiant personnel (9) au moyen d'un dispositif de communication de données (1) par le biais d'un réseau de télécommunication (2) à un dispositif de concentration de données (3),
b) contrôle de l'identifiant personnel (9) et éventuellement du montant à payer (13) communiqués à l'étape a) dans le dispositif de concentration de données (3) au moyen des données qui y sont présentes,
en cas de contrôle positif :
bb1) l'affectation d'un TAN (11) à l'identifiant personnel (9) s'effectuant dans le dispositif de concentration de données (3),
bb2) le TAN (11) et éventuellement le montant à payer (13) étant pris en compte dans les données présentes dans le dispositif de concentration de données (3) conformément à une procédure d'enregistrement des données et
bb3) le TAN (11) étant retourné par le dispositif de concentration de données (3) à un dispositif de communication de données (1) par le biais d'un réseau de télécommunication (2),
le deuxième procédé partiel I' comprenant une répétition quelconque des étapes suivantes :
a') communication du TAN (11) obtenu dans l'étape bb3) à un dispositif de concentration de données (3) au moyen de l'un des dispositifs de communication de données (1) par le biais d'un réseau de télécommunication (2),
b') contrôle du TAN (11) communiqué à l'étape a') par le dispositif de concentration de données (3), les dispositifs de communication de données (1) employés dans l'étape bb3) étant différents des dispositifs de communication de données (1) employés dans l'étape a) et les dispositifs de communication de données (1) employés dans l'étape a') étant différents des dispositifs de communication de données (1) employés dans l'étape a),
en cas de contrôle positif, le paiement du montant correspondant (13) étant effectué par le dispositif de concentration de données (3).

10. Procédé selon la revendication 9, **caractérisé en ce que** les dispositifs de communication de données (1) employés dans l'étape a) et/ou a') sont un ordinateur personnel et les dispositifs de communication de données (1) employés dans l'étape bb3) et/ou a') sont un téléphone mobile.

11. Procédé selon la revendication 10, **caractérisé en ce que** la communication du TAN (11) dans l'étape a') et/ou bb3) s'effectue au moyen du Service SMS (Short Message Service).

12. Procédé de paiement automatisé selon l'une des revendications 9 à 11, **caractérisé en ce que** le TAN possède une validité limitée inférieure ou égale à 30 minutes, de préférence inférieure ou égale à 15 minutes, particulièrement de préférence inférieure ou égale à 15 minutes.

13. Procédé de paiement automatisé au moyen de dispositifs de communication de données (1), de réseaux de télécommunication (2) et de dispositifs de concentration de données (3), le procédé se composant d'un nombre quelconque de répétitions des étapes suivantes:
a) communication du montant à payer (13) et d'un identifiant personnel (9) attribué selon les étapes 1 à 8 au moyen d'un dispositif de communication de données (1) par le biais d'un réseau de télécommunication (2) à un dispositif de concentration de données (3),
b) contrôle de l'identifiant personnel (9) et du montant à payer (13) communiqués à l'étape a) dans le dispositif de concentration de données (3) au moyen des données qui y sont présentes,
en cas de contrôle positif, le paiement du montant (13) étant effectué par le dispositif de concentration de données (3).
